# EUROPEAN PATENT APPLICATION

(11) **EP 4 518 055 A1**
(43) Date of publication of application: **05.03.2025**
(21) Application number: 23194656.7
(22) Date of filing: 31.08.2023
(51) Int. Cl.: H02G 1/00, G01V 15/00, G09F 3/00, H01B 13/34

(54) **METHOD OF MARKING A LOCATION OF INTEREST ON A POWER CABLE**

(71) Applicant: NKT HV Cables AB, 371 60 Lyckeby (SE)
(72) Inventor: HOLMBERG, Leif, Kalmar (SE)
(74) Representative: Kransell & Wennborg KB

(57) **Abstract**

A method of marking a location of interest on a power cable, comprising: a) identifying a location of interest on a layer of the power cable in a process of manufacturing the power cable, and b) providing a marker at the location of interest, the marker being able to transmit radiation.

## Description

### TECHNICAL FIELD

The present disclosure generally relates to power cables.

### BACKGROUND

During power cable manufacturing, factory jointing of two cable lengths may be required when producing a longer power cable for example for submarine applications. Further, an acceptable defect or deviation may arise during production. Acceptable defects, deviations, and factory joints may have to be handled with extra care because the cable typically has a lower mechanical strength in such a region. It would therefore be advantageous to know exactly where such an acceptable defect, deviation, or factory joint is located, both during production and when the power cable is handled after it has been manufactured, for example during the installation process.

### SUMMARY

In view of the above, a general object of the present disclosure is to provide a method that solves or at least mitigates the problems of the prior art.

There is hence according to a first aspect of the present disclosure provided a method of marking a location of interest on a power cable, comprising: a) identifying a location of interest on a layer of the power cable in a process of manufacturing the power cable, and b) providing a marker at the location of interest, the marker being able to transmit radiation.

The location of interest may thereby be marked in a way that allows for later localisation of the location of interest with high accuracy by detecting the radiation emitted by the marker using a detector. Time can thus be saved for localising the location of interest. Moreover, cable length can also be saved as a result of the accurate localisation of the location of interest, for example in case the power cable needs to be cut at or close to the location of interest.

The power cable may be a land power cable or a submarine power cable.

The power cable may be a medium voltage or a high voltage power cable.

The power cable may be a single core or a multi-core power cable.

The layer may for example be a polymeric layer, such as an outer semiconducting layer of an insulation system surrounding the conductor of the power cable, or a polymeric sheath provided outside a metallic water barrier of the power cable, or it may be any other layer of the power cable.

According to one embodiment the marker is a radioisotope.

The detector used for detecting the radioisotope may be a radioactive radiation detector, such as a Geiger counter.

The radioisotope may be applied directly onto the layer at the location of interest.

The radioisotope may for example be applied onto the layer by means of a pen marker.

The radioisotope should preferably be selected to be detectable at low concentrations. For example, the applied amount may be selected such that any cable professional will not receive a dose higher than 50 mSv in a single year handling the power cable.

The radioisotope should preferably be selected to be of a type that does not react chemically with the layer onto which it is applied, or any other layer of the power cable.

The radioisotope may be a synthetic radioisotope or a naturally occurring radioisotope.

According to one example, the radioisotope may radiate a gamma ray.

A gamma ray is generally able to penetrate through any layer of the power cable, especially if the power cable is lead-free, i.e., does not comprise a metallic water barrier made of lead.

According to one embodiment the radioisotope has a half-life of at least one day.

According to one embodiment the radioisotope has a half-life of at most 50 years. The expected operational lifetime of a power cable is typically in the order of 40 years. Thus, by the provision of a radioisotope with a half-life in the range of 40 years up to 50 years, the location of interest may be traced during the entire expected operational lifetime of the power cable.

According to one embodiment the power cable comprises a metallic water barrier after it has been manufactured, wherein the layer is arranged radially underneath the metallic water barrier.

According to one embodiment the metallic water barrier is lead-free.

According to one embodiment the metallic water barrier comprises one of copper, aluminium, and stainless steel.

According to one embodiment the marker is a communications device configured to transmit electromagnetic radiation.

According to one embodiment the communications device is a passive device. The communications device can thus be inductively fed with power, for example from a handheld detector, causing the communications device to transmit electromagnetic radiation.

According to one embodiment the communications device is a Radio Frequency Identification, RFID, tag.

According to one embodiment the location of interest is a defect, deviation, or a location marker of a conductor joint. The deviation may be an acceptable deviation, i.e., be within an acceptable tolerance range.

There is according to a second aspect of the present disclosure provided a cable comprising a layer having a location of interest, wherein the location of interest has a marker able to transmit radiation.

According to one embodiment the marker is a radioisotope.

According to one embodiment the marker is a communications device configured to transmit electromagnetic radiation.

According to one embodiment the marker is a communications device configured to transmit electromagnetic radiation.

According to one embodiment the communications device is a passive device.

According to one embodiment the communications device is a Radio Frequency Identification, RFID, tag.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig 1 is a flowchart of a method of marking a location of interest on a power;
Fig. 2 schematically shows a side view of a power cable during manufacturing of the power cable; and
Fig. 3 schematically shows detection of the location of interest.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

A power cable typically comprises one or more conductors. Each conductor may for example be made of copper or aluminium.

The power cable furthermore comprises an insulation system arranged around each conductor. Thus, the power cable comprises as many insulation systems as there are conductors.

The insulation system comprises an inner semiconducting layer arranged around the conductor, an insulation layer arranged around the inner semiconducting layer, and an outer semiconducting layer arranged around the insulation layer.

The insulation system may be extruded, or it could be composed of oil impregnated paper.

If the insulation system is extruded, each layer of the inner semiconducting layer, the insulation layer, and the outer semiconducting layer comprises a polymer base material, such as a thermoplastic or thermosetting polymer. Each semiconducting layer furthermore comprises conductive particles such as carbon black or any other suitable conductive particle, mixed with the polymer base material.

The power cable may comprise a bedding layer arranged around the insulation system, for example directly around the outer semiconducting layer. The bedding layer may for example be made by winding tape around the insulation system.

The power cable may comprise a screen layer in the form of screen wires arranged around the bedding layer. Alternatively, or additionally, the power cable may comprise a metallic water barrier arranged around the insulation system, for example outside the bedding layer, and outside the screen wires, if present.

The metallic water barrier may be extruded, longitudinally welded, or longitudinally glued, for example. According to one example the metallic water barrier may be formed by metallic tape. The metallic water barrier may for example comprise copper, a copper alloy, aluminium, an aluminium alloy, or a stainless steel. The metallic water barrier may be lead-free.

The power cable may comprise a polymeric sheath arranged around the metallic water barrier. The polymeric sheath may be glued to the metallic water barrier by means of an adhesive such as a polymer-based adhesive. The structure of the power cable described up to this point is a power core. The power cable may comprise a single power core, or multiple power cores.

In case the power cable comprises more than one power core, for example three power cores, the power cores are arranged in a stranded configuration. In this case, the power cable may also comprise filler profiles stranded with the power cores, filling out space between two adjacent power cores in cross-section of the power cable, to increase the radial strength of the power cable. The multi-core power cable may comprise a polymeric sheath arranged around the stranded power cores.

The power cable may comprise one or more armour layers arranged around the one or more power cores. The power cable may comprise an outer sheath or outer serving radially outside the one or more power cores, outside the one or more armour layers, if present.

The power cable may comprise one or more layers of tape arranged for example directly outside each conductor, in the form of conductor tape and/or swelling tape, and/or outside the insulation system, for example in the form of swelling tape.

During production of the power cable, some layers are applied sequentially over each power core, while other layers are applied commonly for all power cores. For example, each insulation system may be wound or triple extruded over the respective conductor, and the metallic water barrier may made by folding a metallic tape/sheath around the insulation system and longitudinally welding or gluing the metallic tape/sheath. The polymeric sheath may then be extruded onto the metallic water barrier, and so on. Additionally, factory joints may be made, which involves mechanical processing of the end sections of two cable lengths to be joined and making a conductor joint before restoring the layers, such as the insulation system, arranged over the conductor joint.

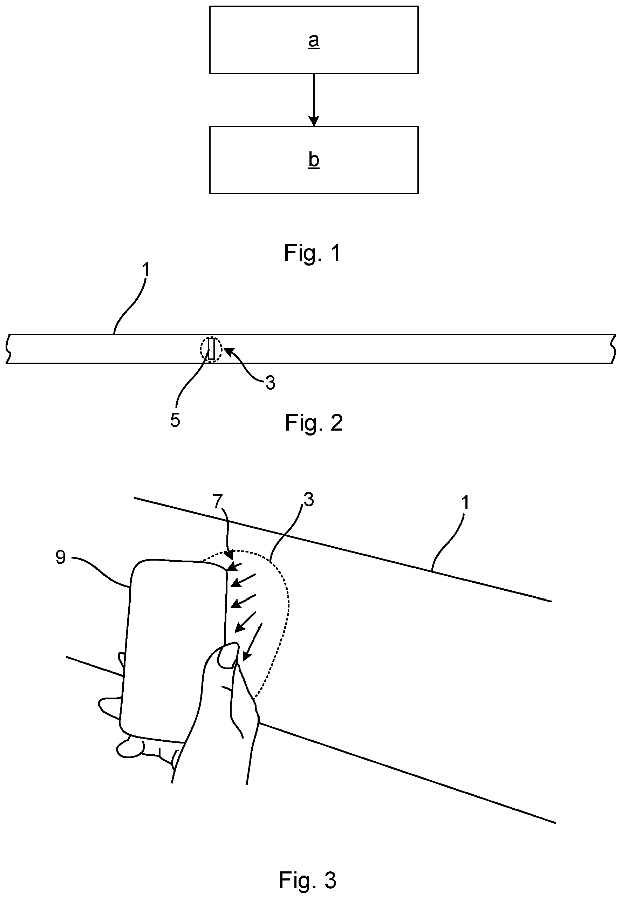

Each process step during the manufacturing process is carefully monitored. In case of a deviation or a defect, the location of the deviation, defect and/or the location of the conductor joint, i.e., a location of interest 3 on a layer of the power cable 1, is identified in a step a), shown in the flowchart in Fig. 1 and in the schematical side view in Fig. 2.

In a step b) a marker 5 is provided, or arranged, at the location of interest 3. The marker 5 has the property that it is able to transmit radiation. The power cable 1 may be provided with several markers 5, each arranged at a respective location of interest 3, in case of several locations of interests 3.

Radiation may for example be radioactive radiation such as in the form of gamma rays, or electromagnetic radiation in the radio frequency (RF) range.

According to one example, the marker 5 is a radioisotope that is applied to a layer of the power cable 1. For example, the marker 5 may be applied directly onto a layer that has been subjected to a defect or deviation. The marker 5 may be applied directly onto the defect or deviation or within a short distance from the defect or deviation, for example within 50 cm of the defect or deviation in the axial direction of the power cable 1. The marker 5 may according to one example be applied onto a layer of the factory joint, e.g., one of the layers of the restored insulation system, to thereby mark the location of the conductor joint.

If the power cable 1 comprises a metallic water barrier that is lead-free and the marker 5 in the form of a radioisotope is provided on a layer underneath the metallic water barrier, the radiation from the radioisotope will penetrate the metallic water barrier, especially if the radioisotope emits gamma rays.

The radioisotope may for example have a half-life in the range of 1 day up to 50 years. Preferably, the half-life is longer than 1 day, for example at least 10 days, at least 20 days, at least 30 days, at least 40 days, or at least 50 days. The half-life may according to one example be at most 40 years, for example at most 1 year, such as at most half a year.

The radioisotope may be a synthetic radioisotope or a naturally occurring radioisotope.

The radioisotope may be of a type that is detectable at low concentrations. For example, the applied amount may be selected such that any personnel carrying out the necessary handling of the power cable, during manufacturing, storage, shipping, and/or installation, will not receive a dose higher than 50 mSv in a single year. Thus, all necessary interaction with and handling of the power cable 1 by one person in one year should not result in a radiation dose higher than 50 mSv.

The radioisotope is preferably of a type that does not react with any layer of the power cable 1 with which it is in direct contact.

According to one example, the marker 5 is a communications device configured to transmit electromagnetic radiation, such as RF waves. The marker 5 in the form of a communications device is arranged on a layer of the power cable 1. For example, the marker 5 may be affixed, or glued, directly onto a layer that has been subjected to a defect or deviation. The marker 5 may be affixed or glued directly onto the defect or deviation or within a short distance from the defect or deviation, for example within 50 cm of the defect or deviation in the axial direction of the power cable 1. The marker 5 may according to one example be applied onto a layer of the factory joint, e.g., one of the layers of the restored insulation system, to thereby mark the location of the conductor joint.

The communications device may for example be a Radio Frequency Identification, RFID, tag.

The communications device may be a passive device. The communications device may thus be powered by a detector 9, such as a handheld detector, shown in Fig. 2, arranged to receive signals transmitted by the communications device. The communications device may have a coil or coils configured to harvest an electromagnetic field generated by the detector 9 held within the communications range of the communication device when personnel is looking for the location of interest 3 along the power cable 1. The communications device is configured to generate energy from the harvested electromagnetic field, for powering the communications device and causing it to transmit a signal to the detector 9. Thus, when fed with power, the communications device radiates radiation 7 in the form of RF waves which can be detected by the detector 9. In this way, the location of interest 3 may be located. The detector 9 may for example be an RFID reader device.

If the marker 5 is a radioisotope, the detector 9 is a radioactive radiation detector, such as a Geiger counter.

The detector 9 may be used for finding the location of interest 3 during the manufacturing and/or testing process, during handling such as during coiling, loading, and/or cable laying.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. Method of marking a location of interest (3) on a power cable (1), comprising:
a) identifying a location of interest (3) on a layer of the power cable (1) in a process of manufacturing the power cable (1), and
b) providing a marker (5) at the location of interest (3), the marker being able to transmit radiation.

2. Method as claimed in claim 1, wherein the marker (5) is a radioisotope.

3. Method as claimed in claim 2, wherein the radioisotope has a half-life of at least one day.

4. Method as claimed in claim 3, wherein the radioisotope has a half-life of at most 50 years.

5. Method as claimed in any of the preceding claims, wherein the power cable (1) comprises a metallic water barrier after it has been manufactured, wherein the layer is arranged radially underneath the metallic water barrier.

6. Method as claimed in claim 5, wherein the metallic water barrier is lead-free.

7. Method as claimed in claim 5 or 6, wherein the metallic water barrier comprises one of copper, aluminium, and stainless steel.

8. Method as claimed in claim 1, wherein the marker (5) is a communications device configured to transmit electromagnetic radiation.

9. Method as claimed in claim 8, wherein the communications device is a passive device.

10. Method as claimed in claim 8 or 9, wherein the communications device is a Radio Frequency Identification, RFID, tag.

11. Method as claimed in any of the preceding claims, wherein the location of interest (5) is a defect, deviation, or a location marker of a conductor joint.

12. Power cable (1) comprising a layer having a location of interest (3), wherein the location of interest (3) has a marker able to transmit radiation.

13. Power cable (1) as claimed in claim 12, wherein the marker (5) is a radioisotope.

14. Power cable (1) as claimed in claim 12, wherein the marker (5) is a communications device configured to transmit electromagnetic radiation.
